(19) Europäisches Patentamt
European Patent Office
Office européen des brevets

(11) **EP 4 280 411 A1**

(12) **EUROPEAN PATENT APPLICATION**
published in accordance with Art. 153(4) EPC

(43) Date of publication:
**22.11.2023 Bulletin 2023/47**

(51) International Patent Classification (IPC):
**H02J 3/38** (2006.01)    **H02M 7/48** (2007.01)
**H02H 11/00** (2006.01)    **H02J 3/40** (2006.01)

(21) Application number: **21924067.8**

(22) Date of filing: **10.06.2021**

(86) International application number:
**PCT/CN2021/099367**

(87) International publication number:
**WO 2022/166060 (11.08.2022 Gazette 2022/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.02.2021 CN 202110144620**

(71) Applicant: **Solax Power Network Technology (Zhejiang) Co., Ltd. Hangzhou, Zhejiang 311500 (CN)**

(72) Inventors:
• **XIAO, Yongli**
  **Hangzhou, Zhejiang 311500 (CN)**
• **JIANG, Fei**
  **Hangzhou, Zhejiang 311500 (CN)**
• **ZHOU, Yu**
  **Hangzhou, Zhejiang 311500 (CN)**
• **KONG, Jian**
  **Hangzhou, Zhejiang 311500 (CN)**
• **HOU, Jian**
  **Hangzhou, Zhejiang 311500 (CN)**

(74) Representative: **Meyer-Dulheuer MD Legal Patentanwälte PartG mbB Hanauer Landstr. 287-289 60314 Frankfurt am Main (DE)**

(54) **RELAY PULL-IN CONTROL METHOD AND CONTROL DEVICE FOR GRID-TIE INVERTER**

(57) Disclosed in the present invention are a relay pull-in control method for a grid-connected inverter and a control device. The method comprises the following steps: respectively detecting states of voltage of a power grid and a relay, and judging that the voltage of the power grid and the relay are in normal states; then modulating alternating current (AC) output voltage of the inverter according to an amplitude of the voltage of the power grid, so that the amplitude of the AC output voltage is higher than that of the voltage of the power grid; and then sending out a relay pull-in command, respectively detecting real-time values of the voltage of the power grid and the AC output voltage of the inverter, and stopping the operation of the inverter mentioned in the former step when detecting that the above real-time values are equal or a voltage difference is smaller than a threshold value. Thus, large current caused by the inverter at a moment when the relay is pulled in can be effectively reduced, a risk that the inverter is subjected to power grid energy backflow after the relay is pulled in can be avoided, and working stability of the inverter and the relay can be effectively improved; and according to the above method, a voltage control difficulty of the inverter can be effectively reduced through open-loop control.

图 1

**FIG. 1**

**Description**

**TECHNICAL FIELD**

The present invention relates to a pull-in control method for a grid-connected inverter, in particular to a relay pull-in control method for a grid-connected inverter and a control device.

**BACKGROUND**

In order to achieve safe electrical isolation between a grid-connected inverter and a power grid, a relay may be installed at an output end of the grid-connected inverter; and in order to meet requirements of safety specification, two or more relays need to be connected in series at an output end of each phase. When the grid-connected inverter pulls in the relay, the power grid is already connected. As a filter capacitor exists inside the output end of the inverter, the power grid may charge the capacitor quickly at a pull-in moment of the relay, and large current formed by charging may flow through the relay and cause a certain degree of damage to the relay. The relay is thus pulled in under a large current state for a long time, a service life of the relay is greatly shortened, and if pull-in current exceeds rated current of the relay, the relay may be damaged immediately, so that the inverter cannot be connected to the power grid for power generation, and serious losses are caused.

In view of the above problems, a general solution is to make the relay pulled in near a zero crossing point of the power grid, but it takes time for real pull-in of the relay from sending out of a pull-in command, and the time is usually not fixed from a few milliseconds to tens of milliseconds. As a result, it is difficult for the method to realize that the power grid is near the zero crossing point at the real pull-in moment of the relay, which makes it impossible to fundamentally avoid large current flowing through the relay. For a three-phase grid-connected inverter, as the relay usually uses a drive command signal, it is more impossible to ensure that relays on three phases are pulled-in near a voltage zero crossing point of the three-phase power grid at the same time.

Another solution is, before the relay is pulled in, to first control output voltage of the inverter to be close to voltage of the power grid in an amplitude and the same in frequency and phase and then pull in the relay. But a problem of this method is that at the real pull-in moment of the relay, the inverter is connected to the power grid, and the inverter is still working; once the inverter is not well controlled, instantaneous large current may flow into the inverter from the power grid, voltage of an inverter bus capacitor is caused to rise, in a less severe case, the inverter alarms for protection, and in a more severe case, an overvoltage damage of the inverter bus capacitor or a damage of a power transistor is directly caused.

On the basis of the latter method, in order to solve the above defects, a patent CN109842154A *Relay Control Method for Grid-connected Inverter and Device* further adjusts a relay control method for a grid-connected inverter: first, voltage at an output end of an inverter is controlled to be close to an amplitude of power grid voltage and to be stable by closed-loop feedback control of voltage of the inverter, and then, the relay is pulled in and time is counted; within a time counting range, an external voltage feedback control loop of the inverter is disconnected, and an internal current feedback control loop instead controls current of the inverter to inhibit current flowing through the relay. But this method has defects that: firstly, a problem that power grid energy flows back to an inverter at a pull-in moment of the relay is not fundamentally solved in principle; secondly, a control mode of this method is too complex, and a voltage feedback loop and a current feedback loop of the inverter are needed to carry out double-loop feedback control; in addition, due to existence of control errors and circuit delay, the relay still has a possibility that instantaneous large current flows back to the inverter from the power grid at the real pull-in moment, and an effect of this patent is only to inhibit the impact current by reducing inverter current to a preset current range when the inverter current is greater than an overcurrent protection value, and the grid-connected inverter is controlled to stop running when a pull-in action of the relay is detected to be completed, so that a risk that voltage of a bus capacitor of the inverter rises or an inverter transistor is directly damaged at the pull-in moment of the relay cannot be fundamentally eliminated.

Therefore, a conventional relay pull-in control method for a grid-connected inverter has problems of poor working stability of the inverter and the relay and high control difficulty.

**SUMMARY**

The present invention aims to provide a relay pull-in control method for a grid-connected inverter and a control device, which can effectively improve working stability of an inverter and a relay, and facilitate control of a pull-in process.

A technical solution of the present invention is that: a relay pull-in control method for a grid-connected inverter comprises following steps:

A. respectively detecting states of power grid voltage and a relay, judging whether the power grid voltage and the relay are in normal states, and if yes, performing a next step;

B. modulating alternating current (AC) output voltage of the inverter according to an amplitude of the power grid voltage, so that the amplitude of the AC output voltage is higher than that of the power grid voltage;

C. sending out a relay pull-in command, then respectively detecting real-time values of the power grid voltage and the AC output voltage of the inverter, and when detecting that the above real-time values are equal or a voltage difference is smaller than a threshold value, stopping the operation of the inverter mentioned in the former step.

In the above relay pull-in control method for a grid-connected inverter, step B specifically comprises:

b1: sampling power grid voltage and performing phase locking on the power grid to obtain phase locking angle information cos($wt$) of the power grid, wherein $W$ is frequency of the power grid and t is time;

b2: artificially increasing a leading phase angle $\varphi$ on the basis of the phase locking angle cos($wt$) to obtain a leading phase locking angle cos($wt - \varphi$) leading phase of the power grid voltage; and

b3: modulating the AC output voltage of the inverter according to the leading phase locking angle cos($wt - \varphi$), a modulating signal being Vm = M * cos($wt - \varphi$), M being an amplitude of the modulating signal, and then by gradually increasing the amplitude M of the modulating signal, making the amplitude of the AC output voltage of the inverter higher than that of the power grid voltage.

In the above relay pull-in control method for a grid-connected inverter, in step b3, the modulating signal Vm is compared with a triangular wave carrier signal to generate a square wave signal for driving a power transistor of the inverter, and then voltage of a direct current (DC) bus is modulated into a square wave signal by the inverter, and the square wave signal is then filtered by an inductor and a capacitor to generate the AC output voltage of the inverter.

In the above relay pull-in control method for a grid-connected inverter, the amplitude of the AC output voltage in step B is higher than that of the power grid voltage by 1 to 5 V

In the above relay pull-in control method for a grid-connected inverter, in step b2, by increasing the leading phase angle $\varphi$, a phase angle of the AC output voltage of the inverter leads that of the power grid voltage .

In the above relay pull-in control method for a grid-connected inverter, when a value of the leading phase angle $\varphi$ in step b2 is taken, a current value $\vec{I}$ flowing through the inductor is calculated through a formula $$\vec{I} = \frac{E\varphi}{wL}$$ , wherein E is a rated voltage amplitude of the power grid voltage, $W$ is frequency of the power grid, L is an inductance value of an inductor between the grid-connected inverter and the power grid; and a value of the current value $\vec{I}$ is smaller than rated current of the inverter and approaches to 0.

In the above relay pull-in control method for a grid-connected inverter, when the inverter in step C is a single-phase inverter, real-time values of the power grid voltage and AC output voltage of the inverter are detected respectively, and when detecting that the above real-time values are equal or a voltage difference is smaller than a threshold value, the operation of the inverter mentioned in step B is stopped ; when the inverter in step C is a three-phase inverter, real-time values of power grid voltage of each phase and AC output voltage of the inverter are detected respectively, and when detecting that the above real-time values are equal or a voltage difference is smaller than a threshold value, the operation of the inverter mentioned in step B is stopped.

In the above relay pull-in control method for a grid-connected inverter, in step C, when the inverter is a three-phase inverter, the leading phase locking angle cos($wt - \varphi$) is used for rotating coordinate transformation, and an AC signal of voltage of the inverter is transformed into a DC signal to be used for modulating the leading phase angle $\varphi$ and AC output voltage of the inverter.

A control device for the above relay pull-in control method for a grid-connected inverter comprises an inverter voltage detection device connected to an output end of an inverter and a power grid voltage detection device connected to a power grid. A control module is connected outside the inverter voltage detection device and the power grid voltage detection device, and an inverter drive module and a relay drive module are connected outside the control module.

Compared with the prior art, the method and the device disclosed in the present invention have following characteristics that:

(1) by making an amplitude of AC output voltage of an inverter higher than that of power grid voltage, and enabling a phase angle of the AC output voltage to lead a phase angle of the power grid voltage, energy can flow to the power grid from the inverter at a pull-in moment of the inverter pulls, the inverter and the relay are prevented from being damaged due to the fact that the energy flows back to the inverter from the power grid, and working stability of the inverter and the relay is effectively improved;

(2) value detection is performed by phase locking, due to existence of circuit delay and phase locking loop delay, a phase angle of AC output voltage of an inverter usually lags behind that of power grid voltage, but by artificially increasing a leading phase angle $\varphi$ on the basis of a phase locking angle of the power grid, the phase angle of the AC output voltage of the inverter can lead that of the power grid voltage, thereby fundamentally eliminating a problem that energy at a pull-in moment of the relay flows back to the inverter from the power grid in principle and improving working stability of the inverter and the relay;

(3) by making the amplitude of the AC output voltage higher than that of the power grid voltage by 1 to 5 V, open-loop control of output voltage of the invert can be realized, that is, feedback control is not needed in a control process, and control parameters are not needed to be fed back and corrected aiming at a voltage difference between the output voltage of the inverter and the power grid voltage, thereby effectively reducing complexity of a control program and required control precision and facilitating control of a pull-in process and application in more relay pull-in occasions;

(4) by enabling the amplitude of the AC output voltage of the inverter to be higher than that of the power grid voltage before pull-in, and stopping operation of the inverter in the former step after pull-in of the relay, mutual energy flow of the inverter after pull-in of the relay can be effectively prevented, and working stability of the inverter is further ensured while stable pull-in of the relay is ensured;

therefore, working stability of the inverter and the relay can be effectively improved, fault risks of the relay and the inverter are reduced, a service life of the relay is further prolonged, and control of a pull-in process is facilitated.

## BRIEF DESCRIPTION OF DRAWINGS

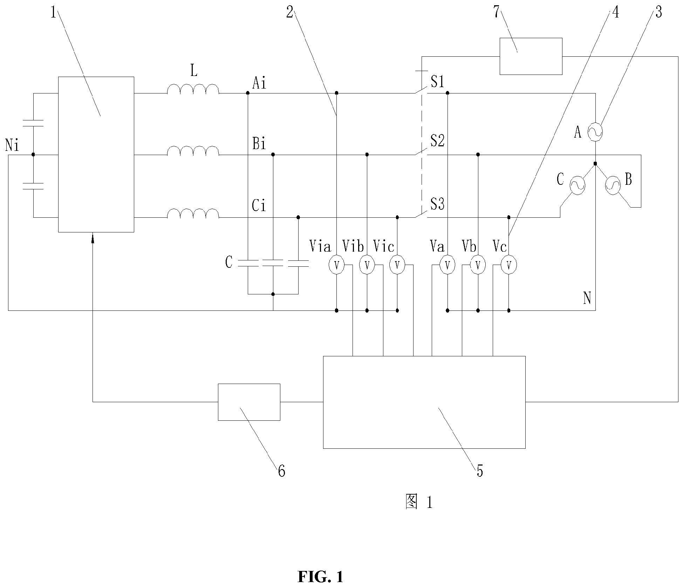

FIG 1 is a schematic structural diagram of the present invention.
Reference signs in the drawing: 1-inverter, 2-inverter voltage detection device, 3-power grid, 4-power grid voltage detection device, 5-control module, 6-inverter drive module, 7-relay drive module.

## DETAILED DESCRIPTION OF THE EMBODIMENTS

The drawing and an embodiment are combined below to further describe the present invention, but not as a basis for limiting the present invention.
Embodiment A relay pull-in control method for a grid-connected inverter comprises following steps:

A. respectively detecting states of power grid voltage and a relay, and judging that the power grid voltage and the relay are in normal states,

wherein according to provisions of NB/T32004: 2018, a normal state of power grid voltage refers to 0.9 Un≤U≤1.1 Un, Un is rated phase voltage 220 V of the power grid, and frequency of the power grid voltage ranges from 49.5 to 50.2 Hz;
judging whether the relay is in a normal state (no adhesion or pull-in fault) according to a conventional relay detection logic, and if yes, performing a next step;

B. modulating AC output voltage of the inverter according to an amplitude of the power grid voltage, so that the amplitude of the AC output voltage is higher than that of the power grid voltage; and
C. sending out a relay pull-in command, then respectively detecting real-time values of the power grid voltage and the AC output voltage of the inverter, and when detecting that the above real-time values are equal or a voltage difference is smaller than a threshold value (within 5 V) within half a mains supply cycle (not limited to half a cycle, time being shorter or longer), stopping operation of the inverter mentioned in the former step.

Step B specifically comprises:

b1: sampling power grid voltage by a digital control chip on the inverter and performing phase locking on the power grid to obtain phase locking angle information $\cos(wt)$ of the power grid, wherein W is frequency of the power grid and t is time;
b2: artificially increasing a leading phase angle $\varphi$ on the basis of the phase locking angle $\cos(wt)$ to obtain a leading phase locking angle $\cos(wt - \varphi)$ leading phase of the power grid voltage; and
b3: modulating the AC output voltage of the inverter according to the leading phase locking angle $\cos(wt - \varphi)$, a modulating signal being $Vm = M * \cos(wt - \varphi)$, M being an amplitude of the modulating signal, and then by gradually increasing the amplitude M of the modulating signal, making the amplitude of the AC output voltage of the inverter higher than that of the power grid voltage.

In step b3, the modulating signal Vm is compared with a triangular wave carrier signal of a certain cycle to generate a square wave signal for driving a power transistor of the inverter, the square wave signal is used to control on and off of the power transistor in the inverter; and then by a drive circuit, the inverter modulates voltage of a DC bus into a square wave signal, and the square wave signal is then filtered by an inductor and a capacitor to generate the AC output voltage of the inverter.

The amplitude of the AC output voltage in step B is higher than that of the power grid voltage by 1 V

In step b2, by increasing the leading phase angle $\varphi$, the phase angle of the AC output voltage of the inverter leads that of the power grid voltage. A minimum value unit of the leading phase angle $\varphi$ depends on a PWM interruption cycle of the inverter. For an inverter with an interruption cycle of 20 kHz, a minimum leading angle of the leading phase angle $\varphi$ is 0.9 degrees, that is, a value of the leading phase angle $\varphi$ can be set as 0.9 degrees, 1.8 degrees, 2.7 degrees and above.

When a value of the leading phase angle $\varphi$ in step b2 is taken, assuming that power grid voltage is represented as $\vec{E}_1 = E$ on a complex plane and voltage of the grid-connected inverter is represented as $\vec{E}_2 = (E + \Delta E)e^{i\varphi}$ on a complex plane, $\Delta E$ is an amplitude of the voltage of the inverter higher than that of the power grid voltage, i is an imaginary unit of the complex plane, $\varphi$ is phase of the voltage phase of the inverter leading that of the power grid voltage, an inductance value of an inductor between the inverter and the grid is L, an inductance value is represented as $jwL$, j is an imaginary unit of the complex plane, and on the above basis, current flowing through the inductor is:

$$\vec{I} = \frac{E(e^{j\varphi} - 1) + \Delta E e^{j\varphi}}{jwL} ;$$

when, between the inverter and the power grid, there is only a voltage difference $\Delta E$ and no phase difference, that

is, $\varphi = 0$, a current value flowing through the inductor is: $\vec{I} = \frac{\Delta E}{jwL} = -\frac{\Delta E}{wL} j$ , so that power flowing to the

$$\vec{P} = \vec{E}_1\vec{I} = -\frac{E \cdot \Delta E}{wL} j$$

power grid is reactive power $\qquad$ ;

when, between the inverter and the power grid, there is only a phase difference $\varphi$ and no voltage difference $\Delta E$,

that is, $\Delta E = 0$, a current value flowing through the inductor is: $\vec{I} = \frac{E\varphi}{wL}$ , so that power flowing to the power grid

$$\vec{P} = \vec{E}_1\vec{I} = \frac{E^2\varphi}{wL}$$

is active power $\qquad$ ;

on the above basis, after a value of the leading phase angle $\varphi$ is taken, a current value $\vec{I}$ flowing through the inductor is calculated through a formula $\vec{I} = \frac{E\varphi}{wL}$ , wherein E is a rated voltage amplitude of the power grid voltage, $W$ is frequency of the power grid, and L is an inductance value of the inductor between the grid-connected inverter and the power grid; and then a value of the leading phase angle $\varphi$ is optimized by a current value $\vec{I}$, the value of the current value $\vec{I}$ needs to be less than a rated current value of an inverter, and the closer to zero, the better;

Assuming that the power grid voltage is a rated voltage amplitude 220 V, an inductance value of the inductor is 2 mH, and frequency of the power grid is 50 Hz, when a value of the leading phase angle $\varphi$ is 1 degree, a current value $\vec{I}$ can be calculated as:

$$\vec{I} = \frac{E\varphi}{wL} = \frac{220 \cdot (1/180) \cdot \pi}{2 \cdot \pi \cdot 50 \cdot (2/1000)} = 6A$$ ;

according to calculation, the current value $\vec{I}$ is within a rated current value of the inverter, indicating that a value of the leading phase angle $\varphi$ can be 1 degree.

When the inverter in step C is a single-phase inverter, real-time values of power grid voltage and AC output voltage of the inverter are detected respectively, and when detecting that the above real-time values are equal or a voltage difference detected within half a mains supply cycle is smaller than a threshold value, the operation of the inverter mentioned in step B is stopped ; when the inverter in step C is a three-phase inverter, real-time values of power grid voltage of each phase and AC output voltage of the inverter are detected respectively, and when detecting that the above real-time values are equal or a voltage difference detected within half a mains supply cycle is smaller than a threshold value, the operation of the inverter mentioned in step B is stopped.

In step C, when the inverter is a three-phase inverter, rotating coordinate transformation can be performed by using the leading phase locking angle cos($wt$ - $\varphi$) as required, a three-phase AC signal is transformed from an abc fixed coordinate system to a dq0 rotating coordinate system, and an AC signal of voltage of the inverter is transformed into a DC signal and then modulation of AC voltage of the inverter is performed, and a transformation relationship is shown in the following formula:

$$\begin{bmatrix} x_d \\ x_q \\ x_0 \end{bmatrix} = \frac{2}{3} \begin{bmatrix} \cos wt & \sin wt & 0 \\ -\sin wt & \cos wt & 0 \\ 0 & 0 & 1 \end{bmatrix} \begin{bmatrix} 1 & -\frac{1}{2} & -\frac{1}{2} \\ 0 & \frac{\sqrt{3}}{2} & -\frac{\sqrt{3}}{2} \\ -\frac{3}{2} & \frac{3}{2} & \frac{3}{2} \end{bmatrix} \begin{bmatrix} x_a \\ x_b \\ x_c \end{bmatrix}$$ ;

wherein $x_a$, $x_b$ and $x_c$ are AC components, cos $wt$ and sin $wt$ are phase locking information, and three DC components $x_d$, $x_q$ and $x_0$ are obtained through coordinate system transformation.

A control device used for the relay pull-in control method for a grid-connected inverter is shown in FIG. 1, and comprises an inverter voltage detection device 2 connected to an output end of an inverter 1 and a power grid voltage detection device 4 connected to a power grid 3. A control module 5 is connected outside the inverter voltage detection device 2 and the power grid voltage detection device 4, the control module 5 can select a digital signal processor DSP or a micro control unit MCU, an inverter drive module 6 and a relay drive module 7 are connected outside the control module 5, the inverter 1 is connected to an end part of the inverter drive module 6, and the relay is connected to an end part of the relay drive module 7.

The present invention has a working principle that energy can be balanced only when an amplitude, frequency and phase of output voltage of the inverter 1 are completely equal to those of voltage of the power grid 3 after the inverter 1 is connected to the power grid 3 at a pull-in moment of the relay, and a problem of mutual energy flow does not occur; however, in an actual situation, being completely equal is impossible, only being approximately equal is made, so at a pull-in moment of the relay, a problem that energy flows back to the inverter 1 from the power grid 3, causing a damage to the inverter 3 exists.

However, in the present application, before pull-in of the relay, the control module 5 detects output voltage of the inverter and power grid voltage through the inverter voltage detection device 2 and the power grid voltage detection device 4 respectively, a modulating signal Vm is then calculated according to a detection result, the modulating signal Vm is replaced with a square wave signal, AC output voltage of the inverter 1 is changed through the inverter drive module 6, so that an amplitude of the output voltage of the invert 1 is higher than that of the power grid voltage 3, and phase of the output voltage of the inverter 1 leads that of the power grid voltage.

When the modulating signal Vm is modulated, a leading phase angle $\varphi$ is artificially increased, so that a phase angle of the AC output voltage of the inverter leads the phase angle of the power grid voltage; meanwhile, the leading phase angle $\varphi$ needs to be matched with a current value $\vec{I}$, that is, the current value $\vec{I}$ calculated by the leading phase angle $\varphi$ needs to be less than a rated current value and approaches to 0; and then the leading phase angle $\varphi$ is calculated according to the above conditions, so that, at a pull-in moment of the relay, on one hand, a problem of energy backflow caused by a phase difference is avoided, and on the other hand, a damage to the relay cause by overlarge current is avoided.

When the inverter voltage detection device 2 and the power grid voltage detection device 4 detect that an amplitude of the output voltage of the inverter 1 is higher than a voltage amplitude of the power grid 3 by within 5V, the control module 5 controls the relay to be pulled in through the relay drive module 7, and former operation of the inverter 1 is stopped after detecting that pull in of the relay is completed, an effect of no large current flowing through the relay at a pull-in moment of the relay is realized, thereby greatly improving a service life of the relay and thoroughly eliminating a risk of failure and a damage of the relay and the inverter.

With the above cooperation, no large current flowing through the relay at a pull-in moment of the relay is ensured, and energy is ensured to flow stably from the inverter 1 to the power grid 3, thereby avoiding a damage to the inverter 1 caused by backflow of energy from the power grid 3.

Meanwhile, voltage control of the inverter 1 is realized without closed-loop feedback control, and only open-loop modulation is needed, so that a control difficulty and required control precision of AC output voltage of the inverter are effectively reduced, and an application occasion of low-current pull-in of the relay is greatly improved.

**Claims**

1. A relay pull-in control method for a grid-connected inverter, **characterized in that**, the method comprises the following steps:

   A: respectively detecting states of power grid voltage and a relay, judging whether the power grid voltage and the relay are in normal states, and if yes, performing a next step;
   B: modulating AC output voltage of the inverter according to an amplitude of the power grid voltage, so that the amplitude of the AC output voltage is higher than that of the power grid voltage; and
   C: sending out a relay pull-in command, then respectively detecting real-time values of the power grid voltage and the AC output voltage of the inverter, and when detecting that the above real-time values are equal or a voltage difference is smaller than a threshold value, stopping the operation of the inverter mentioned in step B.

2. The relay pull-in control method for a grid-connected inverter of claim 1, **characterized in that**, step B specifically comprises:

   b1: sampling power grid voltage and performing phase locking on the power grid to obtain phase locking angle information $\cos(wt)$ of the power grid, wherein W is frequency of the power grid and t is time;
   b2: artificially increasing a leading phase angle $\varphi$ on the basis of the phase locking angle $\cos(wt)$ to obtain a leading phase locking angle $\cos(wt - \varphi)$ leading phase of the power grid voltage; and
   b3: modulating the AC output voltage of the inverter according to the leading phase locking angle $\cos(wt - \varphi)$, a modulating signal being $Vm = M * \cos(wt - \varphi)$, M being an amplitude of the modulating signal, and then by gradually increasing the amplitude M of the modulating signal, making the amplitude of the AC output voltage of the inverter higher than that of the power grid voltage.

3. The relay pull-in control method for a grid-connected inverter of claim 2, **characterized in that**, in step b3, the modulating signal Vm is compared with a triangular wave carrier signal to generate a square wave signal for driving a power transistor of the inverter, and then voltage of a direct current (DC) bus is modulated into a square wave signal by the inverter, and the square wave signal is then filtered by an inductor and a capacitor to generate the AC output voltage of the inverter.

4. The relay pull-in control method for a grid-connected inverter of claim 1 or 2, **characterized in that**, the amplitude of the AC output voltage in step B is 1 to 5 V higher than that of the power grid voltage.

5. The relay pull-in control method for a grid-connected inverter of claim 2, **characterized in that**, in step b2, a phase angle of the AC output voltage of the inverter leads a phase angle of the power grid voltage by increasing the leading phase angle $\varphi$.

6. The relay pull-in control method for a grid-connected inverter of claim 5, **characterized in that**, when a value of the leading phase angle $\varphi$ in step b2 is taken, a current value $\vec{I}$ flowing through the inductor is calculated through a

$$\vec{I} = \frac{E\varphi}{wL}$$

formula , wherein E is a rated voltage amplitude of the power grid voltage, $W$ is a frequency of the power grid, L is an inductance value of an inductor between the grid-connected inverter and the power grid; and a value of the current value $\vec{I}$ is smaller than rated current of the inverter and approaches to 0.

7. The relay pull-in control method for a grid-connected inverter of claim 2, **characterized in that**, when the inverter in step C is a single-phase inverter, real-time values of the power grid voltage and AC output voltage of the inverter are detected respectively, and when detecting that the above real-time values are equal or a voltage difference is smaller than a threshold value, the operation of the inverter mentioned in step B is stopped ; when the inverter in step C is a three-phase inverter, real-time values of power grid voltage of each phase and AC output voltage of the inverter are detected respectively, and when detecting that the above real-time values are equal or a voltage difference is smaller than a threshold value, the operation of the inverter mentioned in step B is stopped.

8. The relay pull-in control method for a grid-connected inverter of claim 7, **characterized in that**, when the inverter in step C is a three-phase inverter, the leading phase locking angle $\cos(wt - \varphi)$ is used for rotating coordinate transformation, and an AC signal of voltage of the inverter is transformed into a DC signal to be used for modulating the leading phase angle $\varphi$ and AC output voltage of the inverter.

9. A control device for the relay pull-in control method for a grid-connected inverter of any of claims 1-8, **characterized in that**, the control device comprises an inverter voltage detection device (2) connected to an output end of the inverter (1) and a power grid voltage detection device (4) connected to the power grid (3). A control module (5) is connected outside the inverter voltage detection device (2) and the power grid voltage detection device (4), and an inverter drive module (6) and a relay drive module (7) are connected outside the control module (5).

图 1

FIG. 1

<div align="center">

**INTERNATIONAL SEARCH REPORT**

</div>

| | International application No. |
|---|---|
| | **PCT/CN2021/099367** |

| A. | CLASSIFICATION OF SUBJECT MATTER |
|---|---|

H02J 3/38(2006.01)i; H02M 7/48(2007.01)i; H02H 11/00(2006.01)i; H02J 3/40(2006.01)i

According to International Patent Classification (IPC) or to both national classification and IPC

| B. | FIELDS SEARCHED |
|---|---|

Minimum documentation searched (classification system followed by classification symbols)

    H02J; H02M; H02H

Documentation searched other than minimum documentation to the extent that such documents are included in the fields searched

Electronic data base consulted during the international search (name of data base and, where practicable, search terms used)

    SIPOABS; DWPI; CNABS; CNTXT; CNKI; EPTXT; USTXT; WOTXT: 浙江艾罗网络能源技术, 继电器, 并网, 同步, 电网, 逆变器, 电压, 吸合, 检测, 冲击, relay, synchronize, parallel, convert, invert, voltage, pull on, strike, spike, peak

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 112510762 A (ZHEJIANG SOLAX POWER NETWORK ENERGY TECHNOLOGY CO., LTD.) 16 March 2021 (2021-03-16)<br>    claims 1-9 | 1-9 |
| X | CN 111864809 A (ZHUHAI INHENERGY TECHNOLOGY CO., LTD.) 30 October 2020 (2020-10-30)<br>    description, paragraphs [0034]-[0050], and figures 1 and 2 | 1, 4, 9 |
| A | CN 111864809 A (ZHUHAI INHENERGY TECHNOLOGY CO., LTD.) 30 October 2020 (2020-10-30)<br>    description, paragraphs [0034]-[0050], and figures 1 and 2 | 2, 3, 5-8 |
| A | CN 101789606 A (HEFEI SUNGROW POWER SUPPLY CO., LTD.) 28 July 2010 (2010-07-28)<br>    entire document | 1-9 |
| A | CN 109842154 A (SUNGROW POWER SUPPLY CO., LTD.) 04 June 2019 (2019-06-04)<br>    entire document | 1-9 |
| A | CN 104184167 A (JIANGSU ZOF NEW ENERGY CO., LTD.) 03 December 2014 (2014-12-03)<br>    entire document | 1-9 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 October 2021** | **25 October 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/099367**

| Patent document cited in search report | | | Publication date (day/month/year) | Patent family member(s) | | | Publication date (day/month/year) |
|---|---|---|---|---|---|---|---|
| CN | 112510762 | A | 16 March 2021 | None | | | |
| CN | 111864809 | A | 30 October 2020 | None | | | |
| CN | 101789606 | A | 28 July 2010 | CN | 101789606 | B | 19 September 2012 |
| CN | 109842154 | A | 04 June 2019 | None | | | |
| CN | 104184167 | A | 03 December 2014 | None | | | |

Form PCT/ISA/210 (patent family annex) (January 2015)

## REFERENCES CITED IN THE DESCRIPTION

**Patent documents cited in the description**

- CN 109842154 A